Europäisches Patentamt

European Patent Office

Office européen des brevets

(11) Veröffentlichungsnummer: **0 184 687**
A2

(12) **EUROPÄISCHE PATENTANMELDUNG**

(21) Anmeldenummer: 85114599.5

(22) Anmeldetag: 16.11.85

(51) Int. Cl.⁴: **G 01 F 23/32**

(30) Priorität: **13.12.84 DE 3445475**

(43) Veröffentlichungstag der Anmeldung: **18.06.86 Patentblatt 86/25**

(84) Benannte Vertragsstaaten: **AT BE CH DE FR GB IT LI LU NL SE**

(71) Anmelder: **Riesselmann & Sohn, Brandstrasse, D-2842 Lohne (DE)**

(72) Erfinder: **Seelhorst, Göttfried, Ing. grad., Juttastrasse 14, D-2843 Dinklage (DE)**

(74) Vertreter: **Jabbusch, Wolfgang, Dr., Elisabethstrasse 6, D-2900 Oldenburg (DE)**

(54) **Füllstandsanzelge für Flüssigkeltsbehälter.**

(57) Bei einer Füllstandsanzeige für Flüssigkeitsbehälter mit einem schwimmenden Geberelement, das mit einer Signaleinrichtung in Wirkverbindung steht, ist vorgesehen, daß das Geberelement mehrere, vorzugsweise drei, in einer Ebene angeordnete Schwimmer aufweist, die an Hebelarmen gehalten sind, welche in einem zentralen Knotenpunkt miteinander verbunden sind, und daß der Knotenpunkt in einer Führung frei beweglich gehalten ist, die etwa im Zentrum des Behälters angeordnet und etwa lotrecht zur Oberfläche der in Ruhelage befindlichen Flüssigkeit ausgerichtet ist.

ACTORUM AG

0184687

Firma Riesselmann & Sohn, Brandstraße, 2842 Lohne

Füllstandsanzeige für Flüssigkeitsbehälter

Die Erfindung betrifft eine Füllstandsanzeige für Flüssigkeitsbehälter, mit einem schwimmenden Geberelement, das mit einer Signaleinrichtung in Wirkverbindung steht.

Füllstandsanzeigen weisen im allgemeinen einen Schwimmer auf, der an einem Hebelarm angeordnet ist, welcher bei fallendem oder steigendem Flüssigkeitsspiegel im Behälter ausgelenkt wird. Die Auslenkung beeinflußt wiederum eine Signaleinrichtung, beispielsweise eine optische Anzeige, ein Meßgerät mit Skala oder dergleichen. Die Signaleinrichtung kann dabei auch derart ausgelegt sein, daß eine Anzeige lediglich bei vorbestimmten Grenzwerten des Flüssigkeitsinhaltes eines Behälters, beispielsweise einem Minimum-Volumen der Flüssigkeit im Behälter, anspricht.

Bei in Fahrzeugen eingebauten Behältern, beispielsweise Brennstofftanks, Öltanks, Trinkwassertanks, Bremsflüssigkeits-Behältern und dergleichen, ist der Behälterinhalt unkontrollierbaren Bewegungen ausgesetzt. Durch Beschleunigungen, Schräglagen des Fahrzeuges usw. ändert sich die Neigung des Flüssigkeitsspiegels im Behälter relativ zum Behälter und damit auch zum im Behälter gehaltenen und geführten Schwimmer. Häufig wird dadurch eine Falschanzeige signalisiert. Bei z.B. Bremsflüssigkeitsbehältern in Kraftfahrzeugen kann dadurch vorgetäuscht werden, daß der Behälterinhalt einen als Mindestfüllmenge vorbestimmten Minimumwert bereits erreicht hat, obwohl der Behälter noch ausreichend gefüllt ist. Kraftfahrzeuge mit entsprechenden selbsttätigen Überwachungsanzeigen können den Fahr

0184687

zeuglenker dann durch aufleuchtende Warnlampen oder dergleichen verwirren und verunsichern.

Kann der Schwimmer einer Füllstandsanzeige relativ genau im Zentrum eines Behälters plaziert werden, kommt es kaum zu den vorbeschriebenen Falschanzeigen, wenn sich die Neigung des Flüssigkeitsspiegels im Behälter ändert. Die zentrale Anordnung eines Schwimmers läßt sich in der Regel aber nicht verwirklichen, vor allen Dingen dann nicht, wenn Flüssigkeitsbehälter durch eingesetzte Trennwände in Abteilungen unterteilt sind oder der Behälter asymetrische Formen aufweist. Trennwände und dergleichen Einbauten sowie asymetrische Formgebung sind aber insbesondere bei Bremsflüssigkeitsbehältern für Kraftfahrzeuge, aber auch bei Brennstofftanks, durch Rücksichtnahme auf gegebene Einbauverhältnisse wohl die Regel. Die in derartige Behälter somit notgedrungen dezentral eingesetzten Schwimmer können bei Schräglagen des Fahrzeuges, bzw. der Behälter, nur verfälschte Füllstände anzeigen.

Der Erfindung liegt die Aufgabe zugrunde, eine Füllstandsanzeige für Behälter, in denen ein Schwimmer nicht zentral angeordnet werden kann, dahingehend zu verbessern, daß Verfälschungen der Anzeige, insbesondere bei Schräglagen, nicht auftreten.

Diese Aufgabe ist bei einer Füllstandsanzeige der vorbezeichneten Gattung dadurch gelöst worden, daß das Geberelement mehrere, vorzugsweise drei, in einer Ebene angeordnete Schwimmer aufweist, die an Hebelarmen gehalten sind, welche in einem zentralen Knotenpunkt miteinander verbunden sind und daß der Knotenpunkt in einer Führung frei beweglich gehalten ist, die etwa im Zentrum des Behälters angeordnet und etwa lotrecht zur Oberfläche der in Ruhelage befindlichen Flüssigkeit ausgerichtet ist.

Durch die erfindungswesentliche Anordnung mehrerer Schwimmer in einer Ebene bleibt eine Neigungsänderung der Flüssigkeitsoberfläche ohne Einfluß auf den im Zentrum frei beweglich angeordneten Knotenpunkt der Hebelarme, durch welche die Schwimmer miteinander verbunden sind. Der Knotenpunkt kann mit der Signaleinrichtung in Wirkverbindung gebracht werden. Schräglagen des Behälters und dergleichen die Neigung des Flüssigkeitsspiegels im Behälter verändernde Einwirkungen werden somit kompensiert, so daß Verfälschungen der Füllstandsanzeigen nicht auftreten. Die erfindungsgemäße Ausbildung des Geberelements mit mehreren in einem zentralen Knotenpunkt verbundenen Schwimmern ist mit Vorteil für eine Füllstandsanzeige bei Behältern geeignet, die eine zentrale Anordnung eines Schwimmers durch Einbauten wie Trennwände oder dergleichen nicht erlauben.

Die Führung des Knotenpunktes ist derart gestaltet, daß sie den zentralen Knotenpunkt frei beweglich im Zentrum des Behälters hält. Zur Übertragung der lotrechten Bewegung des Knotenpunktes in der Führung ist ein mit der Signaleinrichtung in Wirkverbindung stehendes Übertragungsorgan mit dem Knotenpunkt verbindbar. Das Übertragungsorgan ist dabei derart angeordnet, daß lediglich Bewegungen des Knotenpunktes entlang der gerichteten Führung die Signaleinrichtung beeinflussen können. Schwenkbewegungen der Hebelarme um den Knotenpunkt, beispielsweise bei Neigungsveränderungen des Flüssigkeitsspiegels im Behälter bleiben ohne Einfluß auf das Übertragungsorgan.

Nach einer Weiterbildung ist als Führung ein im Behälter angeordneter Hohlzylinder vorgesehen. Ein Hohlzylinder läßt sich, beispielsweise bei Trennwänden in Bremsflüssigkeitsbehältern, ohne weiteres in eine der Trennwände integrieren oder auf sonstige Weise im Zentrum eines Behälters anordnen. Der der Führung des Knotenpunktes dienende Hohlzylinder ist dabei so ausgerichtet, daß seine Längsachse senkrecht zur in Ruhelage befindlichen Flüssigkeit im Behälter steht. Bei durch Schräglagen oder dergleichen bewirkten Neigungsänderung des Flüssigkeitsspiegels im Behälter kann der Knotenpunkt sich somit im Hohlzylinder durch die von den Schwimmern auf die Hebelarme ausgeübten Auftriebskräfte frei drehen, und dabei die von der sich ändernden Neigung der Flüssigkeitsoberfläche verursachte Kippbewegung, bzw. Schwenkbewegung der Schwimmer und ihrer Hebelarme um den Knotenpunkt mitmachen, jedoch nur in Längsrichtung des Hohlzylinders auf- und abgleiten.

Damit die Hebelarme frei beweglich den Auftriebskräften der Schwimmer folgen können, ist mit Vorteil vorgesehen, daß die Wandung des Hohlzylinders von je einem Hebelarm durchgriffene Längsschlitze aufweist.

Nach einer anderen Weiterbildung ist eine Verbindung zwischen Knotenpunkt und Übertragungsorgan, die eine solche gezielte Übertragung der Bewegung des Knotenpunktes erlaubt, so ausgebildet, daß der Knotenpunkt als im Hohlzylinder geführte Gelenkkugel ausgeformt ist, die eine als Gelenkpfanne ausgebildete Ausnehmung aufweist, und daß das Übertragungsorgan eine Lagerkugel aufweist, die in der als Gelenkpfanne ausgebildeten Ausnehmung gehalten ist. Die Gelenkpfanne und die darin aufgenommene Lagerkugel des Übertragungsorgans hat den Vorteil, daß sich Schwenkbewegungen des Knotenpunktes und damit auch der Gelenkpfanne, die sich bei Neigungsänderung des Flüssigkeitsspiegels im Behälter über die Schwimmer einstellen, nicht auf das Übertragungsorgan übertragen. Die Gelenkpfanne dreht sich bei Schwenkbewegungen frei auf der Lagerkugel. Lediglich innerhalb des Hohlzylinders geführte Hebe- bzw. Senkbewegungen des Knotenpunktes und damit auch der Gelenkpfanne übertragen sich auf die Lagerkugel des Übertragungsorgans und können für eine Verarbeitung durch eine geeignete Signaleinrichtung genutzt werden, durch die der Füllstand ohne Verfälschungen angezeigt werden kann.

Mit besonderem Vorteil ist vorgesehen, daß Gelenkpfanne und zugeordnete Lagerkugel mittels einer Schnappverbindung ineinandergesetzt und verrastet sind. Das Ineinandersetzen und Verrasten erleichtert die Montage zwischen Lagerkugel und Gelenkpfanne. Die Bauteile können beispielsweise im Spritzgußverfahren aus Kunststoff gefertigt werden, mit dem Vorteil, daß relativ hohe Maßgenauigkeit eingehalten werden kann, die von wesentlichem Einfluß auf die Leichtgängigkeit der Bewegung zwischen Gelenkpfanne und Lagerkugel sowie dem angestrebten festen Sitz der verrasteten Schnappverbindung ist. Mit weiterem Vorteil ist das Übertragungsorgan ein im Hohlzylinder geführter Kolben, der eine Kolbenstange hat, deren freies Ende die Lagerkugel aufweist. Heb- und Senkbewegungen des zentralen Knotenpunktes der Schwimmer innerhalb der als Hohlzylinder ausgebildeten Führung bewirken somit eine Bewegung des Kolben, der vorteilhafterweise ebenfalls im Hohlzylinder geführt ist.

Die mechanischen, miteinander verbundenen und zusammen bewegten Bauteile sind dabei auf ein Minimum beschränkt, wodurch die Betriebssicherheit der erfindungsgemäßen Füllstandsanzeige optimal ist. Der Kolben kann beispielsweise auf die Signaleinrichtung wirken, indem in den Kolben ein Dauermagnet eingelagert ist, wobei die Signaleinrichtung einen den Kolbenhubweg zugeordneten Reedkontakt aufweist.

Diese Art der Übertragung einer durch die Schwimmer registrierbaren Niveauänderung des Flüssigkeitsstands im Behälter kann zweckmäßigerweise mit besonderem Vorteil bei Bremsflüssigkeitsbehältern für Kraftfahrzeuge verwendet werden, da diese Behälter gewöhnlich aus Kunststoff hergestellt sind. Das Magnetfeld des im Kolben eingelagerten Dauermagneten kann auch Wandungen, beispielsweise des als Führung dienenden Hohlzylinders, von Trennwänden oder die eigentlichen Behälterwände durchdringen, so daß der Reedkontakt auch außerhalb des Behälters angeordnet werden kann.

Nach einer zweckmäßigen Weiterbildung kann der Reedkontakt in eine von außen zugänglich Hohlkammer des Behälters eingesetzt sein. Diese Maßnahme hat den Vorteil, daß der Reedkontakt und damit die Übertragungselemente zur Anzeige- und Signaleinrichtung in keiner Weise mit dem Flüssigkeitsinhalt des Behälters in Berührung kommen. In aus Kunststoff hergestelle Behälter, beispielsweise Bremsflüssigkeitsbehälter, läßt sich eine solche Hohlkammer ohne weiteres einformen, in der dann der Reedkontakt nach Art einer Patrone eingesetzt und befestigt wird, wobei die Leitungsdrähte für den Anschluß an eine Signal- und Anzeigeeinrichtung, beispielsweise am Armaturenbrett eines Fahrzeuges befindliche Instrumente, aus der Hohlkammer herausführen.

Nach einer weiteren Weiterbildung ist vorgesehen, daß dem Knotenpunkt ein aus dem Hohlzylinder vorstehender, und durch eine Behälteröffnung aus dem Behälter herausragender Kontrollstift zugeordnet ist. Beispielsweise kann der Kontrollstift bis unter einen dem Füllstutzen eines Flüssigkeitsbehälters verschließenden Deckel herausgeführt sein, so daß die Funktion der erfindungsgemäßen Füllstandsanzeige nach Abnehmen des Deckels durch einfachen Druck auf den Kontrollstift, durch welchen die Schwimmer heruntergedrückt werden und somit ein niedriges Füllstandsniveau simuliert wird, zum Ansprechen gebracht werden kann. Die einwandfreie Funktion der Füllstandsanzeige kann damit jederzeit manuell geprüft werden, was insbesondere für mit elektronischen Überprüfungs- und Kontrolleinrichtungen ausgerüstete Kraftfahrzeuge von Vorteil ist.

Ein Ausführungsbeispiel der Erfindung, aus dem sich weitere erfinderische Merkmale ergeben, ist in der Zeichnung dargestellt. Es zeigen:

Fig. 1 eine Seitenansicht eines Bremsflüssigkeits-Behälters für Kraftfahrzeuge,
Fig. 2 eine Schnittansicht des Behälters gemäß Fig. 1 entlang der Linie II-II in Fig. 1 gesehen,
Fig. 3 eine Schnittansicht des Behälters gemäß Fig. 2 entlang der Linie III-III in Fig. 2 gesehen,
Fig. 4 eine Perspektivansicht des Behälter-Unterteiles und

Fig. 5 eine Schnittansicht des Behälters gemäß Fig. 1

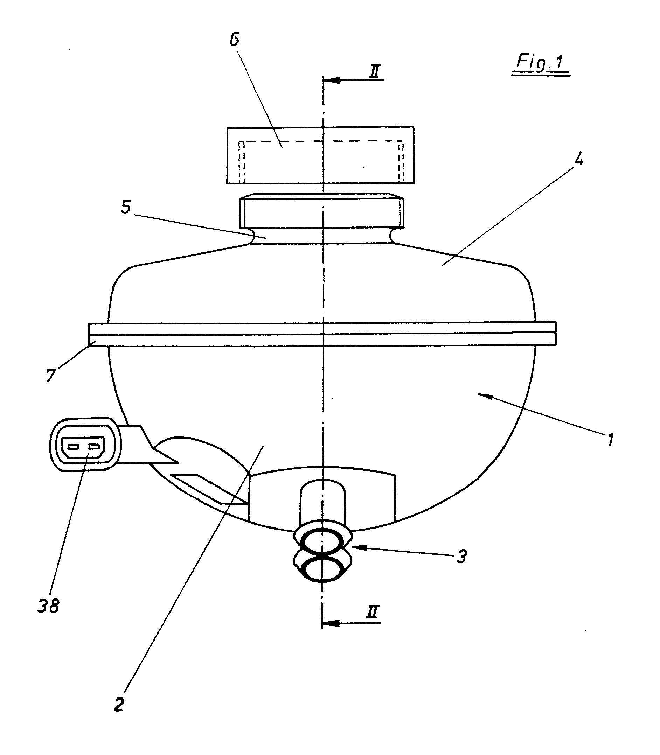

In Fig. 1 ist ein Bremsflüssigkeits-Behälter 1 für Kraftfahrzeuge in der Seitenansicht dargestellt. Der Behälter ist aus Kunststoff gefertigt und besteht aus einem Unterteil 2 mit am Boden befindlichen Anschlüssen 3 sowie einem Oberteil 4 mit einem Füllstutzen 5, der mittels eines Schraubdeckels 6 verschließbar ist. Unterteil 2 und Oberteil 4 sind über Kragenflansche 7 miteinander verbunden.

Das Unterteil weist auch einen außenliegenden Steckkontakt 38 zur Verbindung mit Anzeigeelementen einer Signaleinrichtung wie Meßgeräten oder dergleichen auf, die hier nicht weiter dargestellt sind.

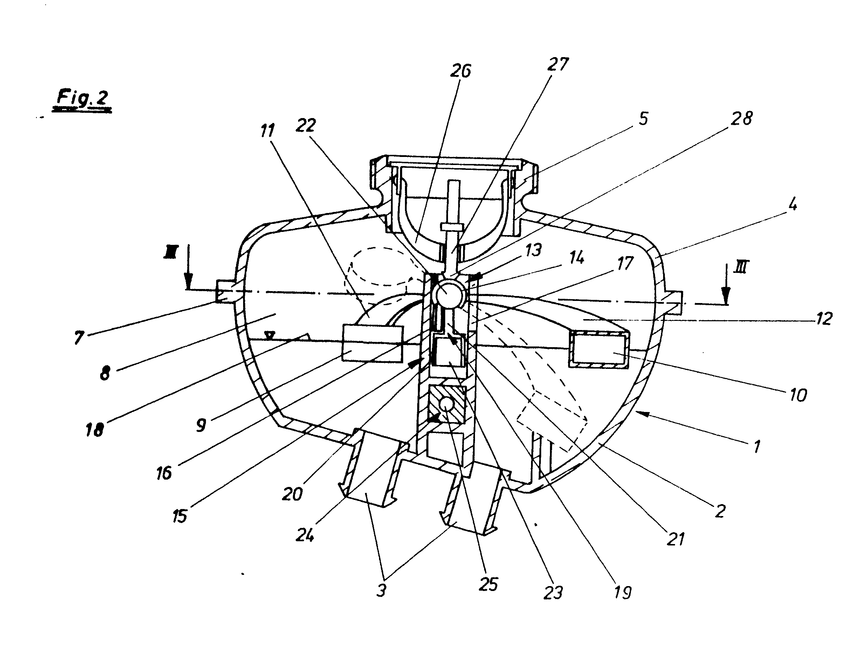

Fig. 2 zeigt eine Schnittansicht entlang der Linie II-II in Fig. 1. Gleiche Bauteile sind mit gleichen Bezugszahlen wie in Fig. 1 bezeichnet.

Das Innere des Behälters 1 ist durch eine Trennwand 8 unterteilt. Die Trennwand verläuft etwa durch die Mitte des Behälters, so daß ein zentraler Schwimmer als Geberelement nicht angeordnet werden kann. Bei diesem Ausführungsbeispiel besteht das Geberelement deshalb aus drei Schwimmern, von denen in Fig. 2 lediglich die Schwimmer 9 und 10 sichtbar sind. Die Schwimmer sitzen an den Enden von wiederum im Zentrum des Behälters zusammenlaufenden und miteinander verbundenen Hebelarmen, von denen hier lediglich die Hebelarme 11 und 12 zu sehen sind. Die zentrale Verbindung der Hebelarme bildet einen zentralen Knotenpunkt 13, der bei diesem Ausführungsbeispiel als Gelenkpfanne 14 ausgebildet ist. In die Trennwand 8 ist eine Führung 15 integriert, die hier als Hohlzylinder 16 ausgebildet ist. Die Wandung des Hohlzylinders ist mit Längsschlitzen 17 versehen. Jeder Längsschlitz wird von einem jeweils zugeordneten Hebelarm der die Schwimmer führenden Hebelarme durchgriffen. Die als Hohlzylinder 16 ausgebildete Führung 15 kann trotz der Anordnung einer Trennwand im Zentrum des Behälters angeordnet werden und da sich die Schwimmer mittels des als Gelenkpfanne 14 ausgebildeten Knotenpunktes frei in der Führung 15 bewegen können, bleibt eine Neigungsänderung der Oberfläche 18 der im Behälter befindlichen Flüssigkeit ohne Einfluß auf eine lotrechte Bewegung des als Gelenkpfanne ausgebildeten Knotenpunktes 13 in Längsrichtung des Hohlzylinders 16.

Durch gestrichelte Linien ist eine Lage der Schwimmer bei schrägstehendem Behälter angedeutet.

Mit 19 ist ein Übertragungsorgan bezeichnet, welches als im Hohlzylinder 16 relativ kippsicher und somit klemmfrei geführter Kolben 20 ausgebildet ist, der eine Kolbenstange 21 hat. Am freien Ende der Kolbenstange sitzt eine Lagerkugel 22, die mittels einer Schnappverbindung in die Gelenkpfanne 14 eingesetzt und damit verrastet ist.

In den Kolben 20 ist ein Dauermagnet 23 eingelassen. Am Boden des Hohlzylinders ist eine Hohlkammer 24 ausgeformt, die vom Außenbereich des Behälters aus zugänglich ist. In die Hohlkammer ist ein an sich bekannter Reedkontakt 25 eingesetzt.

Der Füllstutzen 5 im Behälteroberteil 4 ist mit einer eingesetzten Halterung 26 versehen, die einen Kontrollstift 27 führt, dessen Spitze 28 auf dem als Gelenkpfanne ausgebildeten Knotenpunkt 13 aufliegt. Durch manuelles Niederdrücken des Kontrollstiftes 27, welches nach Abnehmen des Schraubdeckels 6 vom Füllstutzen 5 möglich ist, kann die Funktion und Betriebssicherheit der Füllstandsanzeige überprüft und kontrolliert werden, da bei Annäherung des in den Kolben 20 eingesetzten Dauermagneten 23 der in den Hohlraum 24 eingesetzte Reedkontakt 25 anspricht. Dieses Ansprechen erfolgt normalerweise bei Absinken der Oberfläche 18 der im Behälter befindlichen Flüssigkeit und einer dementsprechenden Nachführung der Schwimmer, kann aber, wie beschrieben, auch durch manuelles Niederdrücken des Kontrollstiftes 27 simuliert werden.

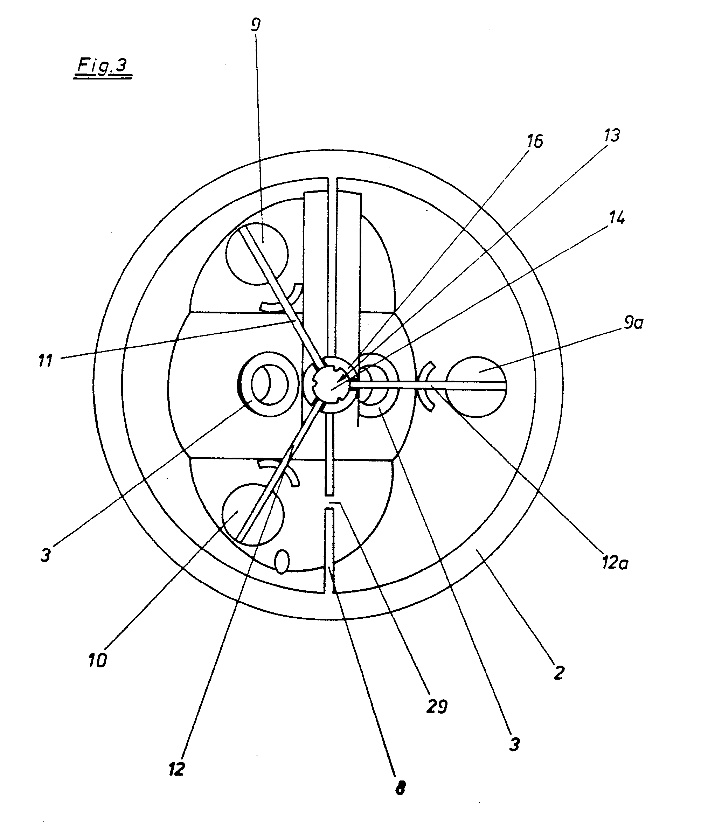

Fig. 3 zeigt eine Ansicht des Unterteils 2 des Behälters entlang der Linie III-III in Fig. 2. Gleiche Bauteile sind mit gleichen Bezugszahlen versehen. Fig. 3 läßt erkennen, wie die drei Schwimmer 9, 10 und 9a an zwischen sich einen Spreizwinkel von etwa 120° aufweisenden Hebelarmen 11, 12 und 12a an dem als Gelenkpfanne 14 ausgebildeten zentralen Knotenpunkt 13 gehalten sind. Der Knotenpunkt wird wiederum frei beweglich in der als Hohlzylinder 16 ausgebildeten Führung 15 gehalten, welche in die Trennwand 8 des Behälters integriert ist. Die Trennwand 8 teilt den Innenraum des Behälters in zwei Abteile, die untereinander durch einen Überlaufschlitz 29 in der Trennwand verbunden sind, so daß der flüssige Behälterinhalt von einem Abteil in das andere fließen kann. In beiden Abteilen ist somit das Niveau der Oberfläche der Flüssigkeit stets gleich.

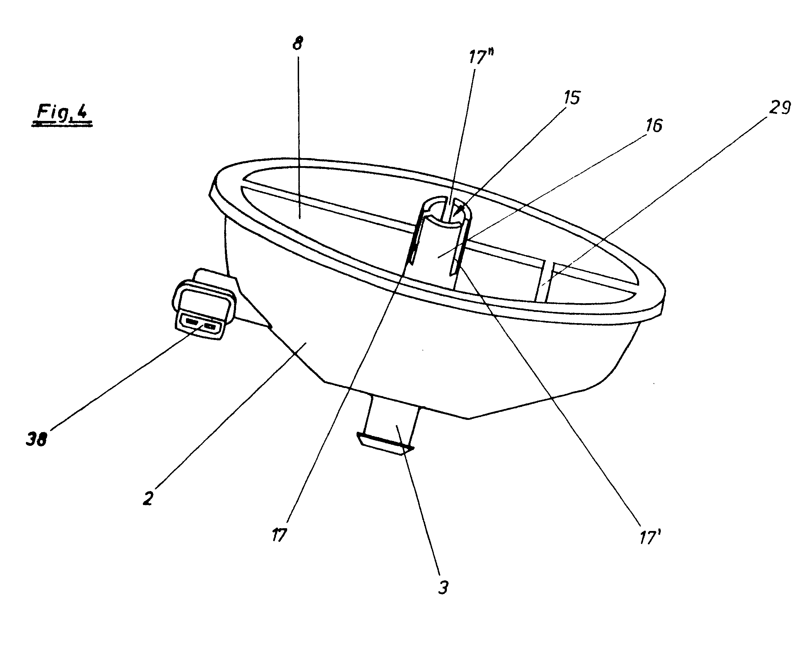

Fig. 4 zeigt eine perspektivische Ansicht des Unterteils 2 des Behälters ohne eingesetzte Schwimmer. Fig. 2 läßt die Anordnung der Trennwand 8 und der als Hohlzylinder 16 ausgebildeten Führung 15 erkennen. Der Hohlzylinder weist die in Fig. 2 bereits angedeuteten Längsschlitze 17, 17' und 17'' auf. Mit 29 ist wiederum der Überlaufschlitz in der Trennwand 8 bezeichnet.

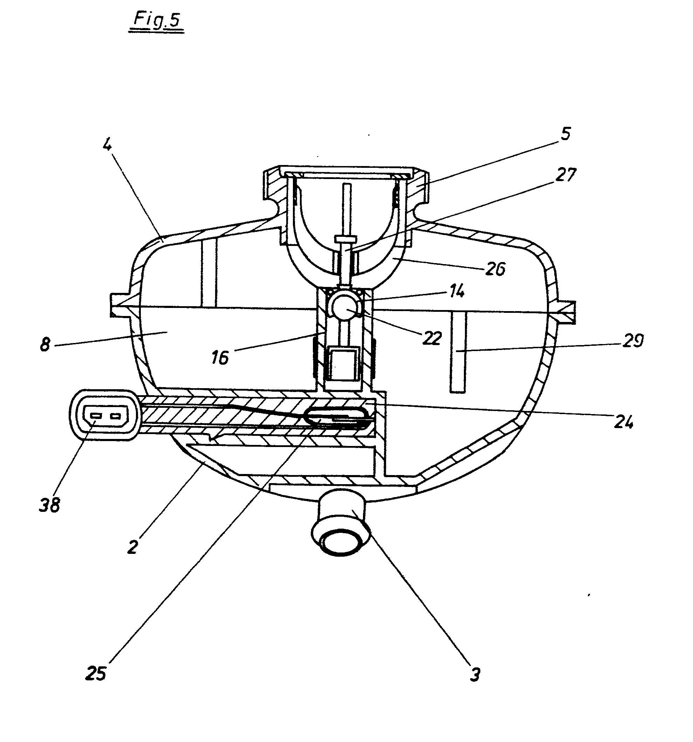

Fig. 5 zeigt einen in die Zeichnungsebene gelegten Schnitt durch den in Fig. 1 dargestellten Behälter. Gleiche Bauteile sind mit gleichen Bezugszahlen bezeichnet. Zwecks Verdeutlichung wurden die in Fig. 2 und 3 dargestellten Schwimmer mit ihren Hebelarmen nicht eingezeichnet.

Fig. 5 läßt insbesondere die Anordnung der nach außen führenden Hohlkammer 24 erkennen, in die ein Reedkontakt 25 eingesetzt ist, der mit dem Steckkontakt 38 verdrahtet ist.

0184687

Patentansprüche:

1. Füllstandsanzeige für Flüssigkeitsbehälter, mit einem schwimmenden Geberelement, das mit einer Signaleinrichtung in Wirkverbindung steht,
dadurch gekennzeichnet,
daß das Geberelement mehrere, vorzugsweise drei, in einer Ebene angeordnete Schwimmer (9, 9a, 10) aufweist, die an Hebelarmen (11, 12, 12a) gehalten sind, welche in einem zentralen Knotenpunkt (13) miteinander verbunden sind, und daß der Knotenpunkt (13) in einer Führung (15) frei beweglich gehalten ist, die etwa im Zentrum des Behälters (1) angeordnet und etwa lotrecht zur Oberfläche (18) der in Ruhelage befindlichen Flüssigkeit ausgerichtet ist.

2. Füllstandsanzeige nach Anspruch 1, dadurch gekennzeichnet, daß ein mit der Signaleinrichtung in Wirkverbindung stehendes Übertragungsorgan (19) mit dem Knotenpunkt (13) verbunden ist.

3. Füllstandsanzeige nach Anspruch 1 und 2, dadurch gekennzeichnet, daß die Führung (13) ein im Behälter (1) angeordneter Hohlzylinder (16) ist.

4. Füllstandsanzeige nach Anspruch 3, dadurch gekennzeichnet, daß die Wandung des Hohlzylinders (16) von je einem Hebelarm (11, 12, 12a) durchgriffene Längsschlitze (17, 17', 17'') aufweist.

5. Füllstandsanzeige nach einem der vorhergehenden Ansprüche, dadurch gekennzeichnet, daß der Knotenpunkt (13) als im Hohlzylinder (16) geführte Gelenkkugel ausgeformt ist, die eine als Gelenkpfanne (14) ausgebildete Ausnehmung aufweist und daß das Übertragungsorgan (19) eine Lagerkugel (22) aufweist, die in der als Gelenkpfanne (14) ausgebildeten Ausnehmung gehalten ist.

6. Füllstandsanzeige nach Anspruch 5, dadurch gekennzeichnet, daß Gelenkpfanne (14) und zugeordnete Lagerkugel (22) mittels einer Schnappverbindung ineinandersetzbar und verrastbar sind.

7. Füllstandsanzeige nach einem der vorhergehenden Ansprüche, dadurch gekennzeichnet, daß das Übertragungsorgan (19) ein im Hohlzylinder (16) geführter Kolben (20) ist, der eine Kolbenstange (21) hat, deren freies Ende die Lagerkugel (22) aufweist.

8. Füllstandsanzeige nach Anspruch 7, dadurch gekennzeichnet, daß in dem Kolben (20) ein Dauermagnet (23) eingelagert ist, und daß die Signaleinrichtung einen den Kolbenhubweg zugeordneten Reedkontakt (25) aufweist.

9. Füllstandsanzeige nach Anspruch 8, dadurch gekennzeichnet, daß der Reedkontakt (25) in eine von außen zugängliche Hohlkammer (24) des Behälters (1) eingesetzt ist.

10. Füllstandsanzeige nach einem der vorhergehenden Ansprüche, dadurch gekennzeichnet, daß dem Knotenpunkt (13) ein aus dem Hohlzylinder vorstehender und durch eine Behälteröffnung aus dem Behälter (1) herausragender Kontrollstift (27) zugeordnet ist.

1/5

Fig. 1

Fig.2

Fig.3

0184687

3/5

9453

Fig. 4

9453

C184687

Fig.5